Europäisches Patentamt

(19) European Patent Office    (11) Publication number: **0 215 597**
**B1**
Office européen des brevets

(12) **EUROPEAN PATENT SPECIFICATION**

(45) Date of publication of the patent specification:    (51) Int. Cl.⁴: **F16D 65/12**
04.04.90

(21) Application number: **86306683.3**

(22) Date of filing: **29.08.86**

(54) **Improvements relating to wheel mounted discs.**

(30) Priority: **03.09.85 GB 8521803**

(43) Date of publication of application:
**25.03.87 Bulletin 87/13**

(45) Publication of the grant of the patent:
**04.04.90 Bulletin 90/14**

(73) Proprietor: **LUCAS INDUSTRIES public limited company, Kings Road, Tyseley Birmingham B11 2AH(GB)**

(72) Inventor: **Tickle, Colin John Frederick, 15 Stonewalls Burton, Rossett Clwyd, CL12 0LG(GB)**
Inventor: **Adamson, John, 16 Oldfield Way Heswall, Wirral Merseyside(GB)**
Inventor: **Clarke, David, 43 Brookhurst Road Bromborough, Wirral Merseyside(GB)**

(84) Designated Contracting States:
**DE FR GB IT**

(74) Representative: **Stringer, David Hiram et al, W.P. THOMPSON & CO Coopers Building Church Street, Liverpool L1 3AB(GB)**

(56) References cited:
**EP-A- 0 065 312**
**CH-A- 469 589**
**DE-A- 1 680 379**
**DE-A- 2 806 028**
**DE-B- 1 158 095**
**DE-B- 1 175 721**
**GB-A- 1 478 696**
**GB-A- 1 528 126**
**GB-A- 2 037 940**
**GB-A- 2 136 921**
**US-A- 4 058 190**

## Description

The present invention relates to a wheel incorporating a braking disc.

In particular the present invention relates to a wheel comprising a central hub and an outer rim, the hub and rim being interconnected by a web, with an annular braking disc secured to each side of the web. The braking disc may be a complete continuous annulus or composed of two or more curved segments.

In certain wheels, especially railway vehicle wheels, high duty braking discs are required to cater for the braking of very large masses from high speeds. Certain such known braking discs are provided with a series of spaced apart holes through which bolts extend to secure the discs to the web of a wheel. However, as a result of the large amount of heat generated in the braking discs under braking, differential expansion causes large internal stresses to be set up around the bolt holes, and as a result surface cracking can and does occur. Clearly this is undesirable as it reduces the life of the braking disc.

The aim of the present invention is to provide a wheel wherein the braking discs are secured without the need for holes in the braking surfaces of the discs or disc segments, whilst accommodating thermal expansion without the occurrence of internal stresses at a detrimental level.

According to the present invention there is provided a wheel comprising a central hub and outer rim, the hub and rim being interconnected by a central web, an annular braking disc being mounted on each side of the central web, each braking disc being supported on the wheel by resilient retaining connections which are located substantially parallel to the axis of the hub, characterised in that each resilient retaining connection takes the form of a roll pin which is secured to the web adjacent to said central hub, the roll pins each engage an inner edge region of the annular braking disc, and are each located in a part-cylindrical recess formed in a support member which is secured to the web adjacent to the central hub, said support members being located at circumferentially spaced apart locations around the hub with said recesses extending generally parallel to the axis of the hub.

By virtue of the support members being separate items which are fixed e.g. bolted, to the less stressed web, an advantageous wheel construction can be obtained. Each recess extends axially of the wheel and each roll pin comprises a hollow cylindrical member made of spring steel, which has an axially extending slot of wavy profile, extending for the whole length of the cylindrical member. A roll pin is located in each partially cylindrical recess and the radially inner edge region of the annular braking disc is formed with complementarily spaced and dimensioned recesses which also engage with said roll pins. To hold the roll pins axially in position with respect to the wheel, an end cap is provided for each roll pin, each end cap being bolted to the web or hub and extending over and into the outer end of roll pin. The end caps preferably each have a tongue which engages in the slot of the roll pin to thus locate and hold the roll pins in the desired rotational position e.g. with the slots directed tangentially to the inner edge of the braking disc. Further, the inner edge of the braking disc is preferably extended axially of the wheel and the end caps engage this extension to hold the radially inner edge region of the braking disc against the planar surface of the central web of the wheel.

In another embodiment of the present invention generally L-shaped gripping members as viewed in axial cross-section with respect to the wheel, engage the outer edge of the braking disc segments at spaced apart locations, in addition to the resilient roll pins engaging inner edge regions of the braking disc segments as described hereabove. These L-shaped gripping members are bolted to the central web of the wheel so that one limb of the L-shape extends generally radially inwardly of the wheel and substantially parallel to but spaced from the planar web surface. This one limb of each gripping member extends into a radially extending, substantially complementary recess in the outer periphery of the annular braking disc. Whilst said one limb of each gripping member holds the outer edge of the braking disc firmly against the central web of the wheel, it does not extend radially into the recess to the maximum possible extent and neither does the outer edge of the braking disc engage the other limb of the L-shaped gripping member by means of which the gripping member is bolted to said web. Thus there are radial spaces available, to allow for radial expansion of the braking disc. If desired each annular braking disc can be formed by at least two curved segments.

In use, with any of the above embodiments of the present invention, radial expansion due to the heat generated under braking, is accommodated for by the resilient retaining connections flexing. Additionally the outer edge of the braking disc or segments can move radially, the outer edge in said another embodiment moving under said one limb towards or away from the other limb of each L-shaped gripping member. Further, expansion under heavy braking, resulting from the difference in temperature between the braking surface and the disc surface contiguous with the web of the wheel, will cause the radial extremities of the annular disc or segments to press against the central web of the wheel. This sets up stresses in the braking surface, which on cooling and after a number of such braking operations, can result in the braking surface tending towards being concave. If the radially inner edge of the annular braking disc is held, then the radially outer edge of the disc will tend to move away from the web. In said one embodiment of the present invention the braking disc is designed such that said movement away from the web is minimal and within acceptable limits having regard to the required function of the braking disc. In contrast, said another embodiment of the present invention obviates this problem by holding the radially inner and outer edges of the annular braking disc against the central web whilst accommodating radial expansion, minimal stresses alone being thus set up on the disc due to the constraints provided.

The present invention will now be further described, by way of example, with reference to the accompanying drawings, in which:-

Fig. 1 is a front view of part of one embodiment of a wheel constructed according to the present invention;

Fig. 2 is a cross-sectional view taken along line X-X in Fig. 1;

Fig. 3 is a front view of part of another embodiment of a wheel constructed according to the present invention;

Fig. 4 is a cross-sectional view taken along line Y-Y in Fig. 3;

Fig.5 is a perspective view of a support member for use in providing a recess for a roll pin; and

Fig.6 is a cut-away view of part of a wheel showing the support member in position.

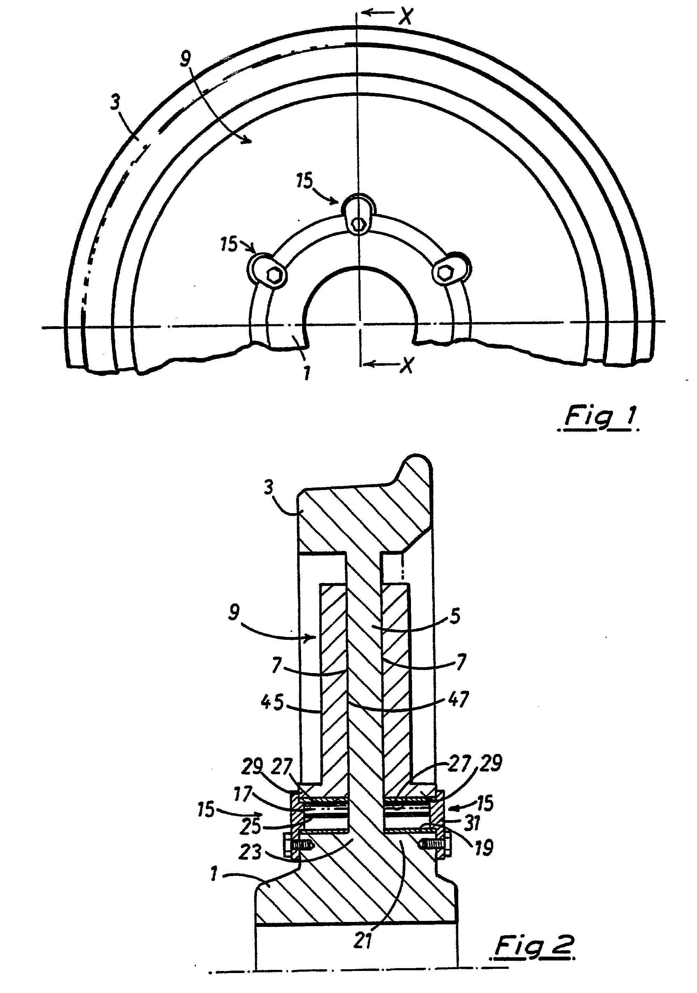

The wheel illustrated in Figs. 1 and 2 of the accompanying drawings comprises a central hub 1 and an outer rim 3 interconnected by a web 5 having planar surfaces 7. A braking disc 9 formed as an annulus is mounted on the planar surface 7 on each side of the web 5 using resilient retaining connections 15.

Each resilient retaining connection 15 comprises a roll pin 17 located in a part cylindrical recess 19 formed in a shoulder 21 on the widening part 23 of the web 5 adjacent to the hub 1. The part cylindrical recesses 19 are provided at circumferentially spaced apart locations on the wheel and extend axially of the wheel. Each roll pin 17 comprises a hollow cylinder of spring steel with an axially extending slot 25 provided along its full length; the slot 25 having a wavy profile. The radially inner edge of each annular brake disc is provided with curved recesses 27 which are of complimentary circumferential spacing and dimensions to the recesses 19, these curved recesses 27 engaging the radially outer portion of the respective roll pins 17. At least in the region of each curved recess 27, the inner edge of the annular brake disc has an axial extension 29, and an end cap 31 bolted to the shoulder 21 on the web 5, extends both over and into the axially outer end of the respective roll pin 17, and over the axial end of the axial extension 29. Thus the end caps 31 each hold a roll pin 17 in the desired axial position and also hold the radially inner edge region of the annular brake disc against the planr surface 7 of the web 5. Further, the end caps 31 each have a tongue which engages in the slot 25 of a roll pin 17 to hold the desired rotational position of the roll pin 17.

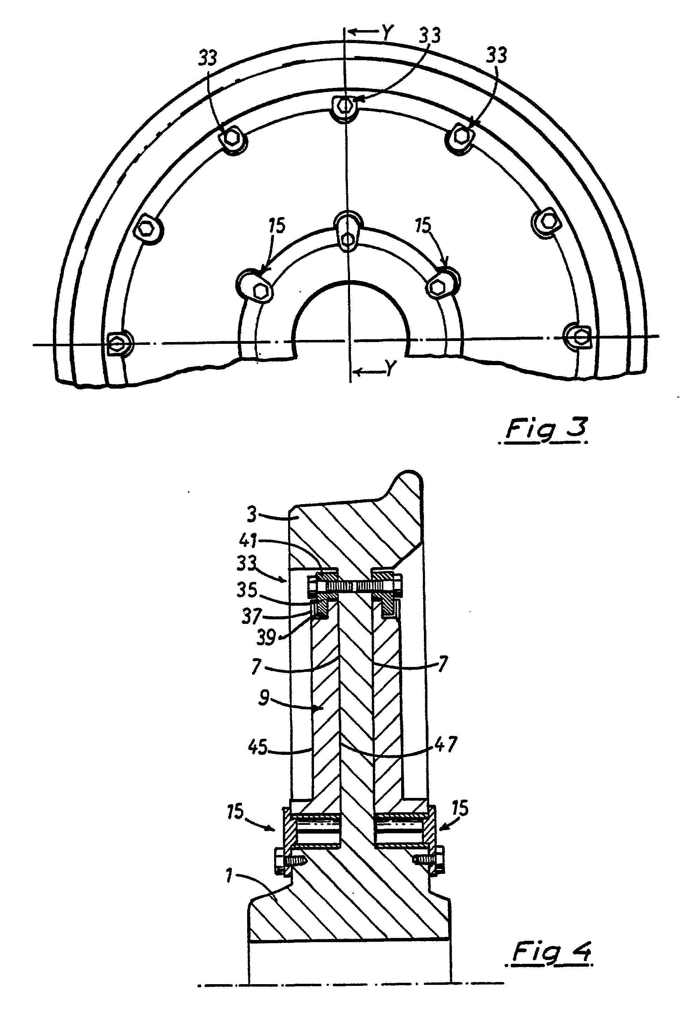

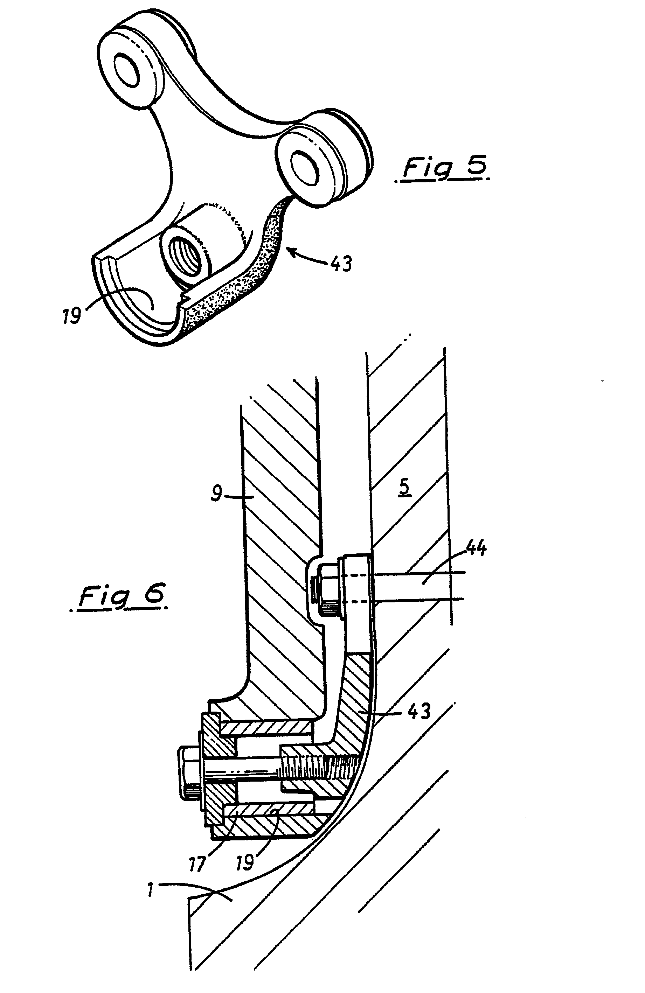

The wheel illustrated in Figs. 3 and 4 utilises the same resilient retaining connections 15 as used in the embodiment of Figs. 1 and 2, though additionally gripping members 33 engage over the radially outer edge of each disc 9, which gripping members are object of claims 8 to 10.

The gripping members 33, as best seen in Fig.4, are each generally L-shaped in configuration and are bolted to the central web 5 with one limb 35 spaced from planar surface 7 and extending radially inwardly of the wheel, generally parallel to the planar surface 7. Whilst one bolt can be used for each gripping member 33 as shown in Fig.4, a single bolt can alternatively extend through the web 5 and secure two aligned gripping members on opposite sides of the web 5, to the web 5. The gripping members 33 on each side of the wheel, are arranged at equi-spaced apart circumferential locations adjacent to the wheel rim 3, with said one limb 35 extending into a substantially complementary recess 37 formed on the front face of the brake disc 9. Said one limb 35 holds the radially outer edge region of the brake disc 9 firmly against the planar surface 7 of the web 5. However, there is clearance both between the free end of said one limb 35 and the radially inner base 39 of the recess 37, and between the radially outer edge of the disc 9 and the other limb 41 of the gripping member 33. Thus, whilst being held firmly against the web 5, the disc 9 may expand radially inwardly or outwardly. If desired each annular disc can alternatively be formed in at least two segments.

Whilst in the above-described embodiments the part-cylindrical recesses are formed in a shoulder 21 on the widening part of the central web 5 adjacent to the hub 1, each part-cylindrical recess 19 can alternatively be formed in a respective support member 43 (Fig.5) which can be bolted as at 44 to the wheel adjacent to the hub 1. This embodiment is subject of claim 1. In this way, existing wheels can be modified in accordance with the present invention.

Essentially in any of the above-described embodiments, the roll pins and end caps do not project beyond the axial extent of the hub 1. Thus the important spatial requirements of wheel design are not affected by this brake disc brake mounting.

In use with any of the above described embodiments of the present invention, radial expansion due to the heat generated under braking, is allowed for by the resilient retaining connections 15, 31 flexing and in the embodiment of Figs. 3 and 4, by the outer edge of the braking disc or segments, moving under said one limb 35 towards or away from the other limb 41 of each L-shaped gripping member 33. Further under heavy braking, expansion due to the differences in temperature between the braking surface 45 and the disc surface 47 contiguous with the web 5 of the wheel, will cause the braking surface 45 to expand and for the radial extremities of the annular disc 9 to press against the central web 5 of the wheel.

The present invention thus provides a simple way of mounting a brake disc on a wheel, expansion being catered for so that minimal internal stresses are set up on the braking disc due to such expansion.

**Claims**

1. A wheel comprising a central hub (1) and outer rim (3), the hub (1) and rim (3) being interconnected by a central web (5), an annular braking disc (9) being mounted on each side of the central web (5), each braking disc (9) being supported on the wheel by resilient retaining connections (15) which are located substantially parallel to the axis of the hub (1), characterised in that each resilient retaining connection takes the form of a roll pin (17) which is secured to the web (5) adjacent to said central hub (1), the roll pins (17) each engage an inner edge region (27) of the annular braking disc (9), and are each located in a part-cylindrical recess (19) formed in a support member (43) which is secured to the web (5) adjacent to the central hub (1), said support members (43) being located at circumferentially spaced apart locations around the hub (1) with said recesses (19) extending generally parallel to the axis of the hub (1).

2. A wheel as claimed in claim 1, wherein each roll pin comprises a hollow cylindrical member made of spring steel, which has an axially extending slot (25), extending for the whole length of the cylindrical member.

3. A wheel as claimed in claims 1 or 2, wherein end caps (31) bolted to the support members (43) extend over the outer end of each roll pin (17) to hold the respective roll pins (17) in said partcylindrical recesses (19).

4. A wheel as claimed in claim 3, wherein each said end cap (31) extends into an end of a roll pin (17) to hold the roll pin (17) in said recess (19) and secure the roll pin (17) in a desired rotational position with respect to said recess (19).

5. A wheel as claimed in any one of the preceding claims, wherein the radially inner edge of the annular braking disc (9) has recesses (27) so located to engage said roll pins (17).

6. A wheel as claimed in claim 5 when dependent upon claim 3, wherein the inner edge region of the annular braking disc (9) is extended axially of the disc (9) in the region of said recesses (27) in the disc (9), said end caps (31) engaging these extended regions (29) of the disc (9).

7. A wheel as claimed in any one of the preceding claims, in which the roll pins (17) are dimensioned and arranged to lie within the axial extent of the hub (1).

8. A wheel as claimed in any one of the preceding claims, wherein gripping members (33) secured to the said central web (5) engage the outer edge region of said annular braking disc (9), at circumferentially spaced apart locations.

9. A wheel as claimed in claim 10, wherein said gripping members (33) each have a limb (35) extending generally radially inwardly of the wheel and substantially parallel to but spaced from the central web (5), said limb (35) extending into a radially extending, substantially complementary recess (37) in the outer periphery of the annular braking disc (9).

10. A wheel as claimed in claim 9, wherein said limb (35) holds the braking disc (9) firmly against said central web (5) but does not extend radially into the said substantially complementary recess (37) to the maximum extent, clearance also existing between the outer edge of the braking disc (9) and said gripping member (33).

**Patentansprüche**

7. Rad mit einer Nabe (1) in der Mitte und einer Felge (3) an der Außenseite, wobei Nabe (1) und Felge (3) durch einen zentralen Steg (5) verbunden sind und an jeder Seite des zentralen Stegs (5) eine ringförmige Bremsscheibe (9) angebracht und jede Bremsscheibe (9) am Rad durch federnd nachgiebige Verbindungen (15) abgestützt ist, die im wesentlichen parallel zur Achse der Nabe (1) liegen, dadurch gekennzeichnet, daß jede federnde Halterungsverbindung in Form eines Wälzzapfens (17) vorgesehen ist, der am Steg (5) der mittleren Nabe benachbart befestigt ist, daß die Wälzzapfen (17) jeweils mit einem Innenkantenbereich (27) der ringförmigen Bremsscheibe (9) in Eingriff stehen und sich jeweils in einer teilzylindrischen Ausnehmung (19) befinden, die in einem Stützglied (43) ausgebildet ist, welches der zentralen Nabe (1) benachbart am Steg (5) befestigt ist, wobei die Stützglieder (43) an in Umfangsrichtung im Abstand voneinander liegenden Stellen um die Nabe (1) herum angeordnet sind und die Ausnehmungen (19) sich insgesamt parallel zur Achse der Nabe (1) erstrecken.

2. Rad nach Anspruch 1, bei dem jeder Wälzzapfen ein hohlzylindrisches Teil aus Federstahl aufweist, das einen sich achsial erstreckenden Schlitz (25) hat, der über die ganze Länge des zylindrischen Teils reicht.

3. Rad nach Anspruch 1 oder 2, bei dem mit den Stützgliedern (43) verschraubte Stirnkappen (31) sich über das äußere Ende jedes Wälzzapfens (17) erstrecken, um die entsprechenden Wälzzapfen (17) in den teilzylindrischen Ausnehmungen (19) zu halten.

4. Rad nach Anspruch 3, bei dem sich jede Stirnkappe (31) in ein Ende eines Wälzzapfens (17) erstreckt, um den Wälzzapfen (17) in der Ausnehmung (19) zu halten und den Wälzzapfen (17) in einer gewünschten Drehstellung in Bezug auf die Ausnehmung (19) zu sichern.

5. Rad nach einem der vorhergehenden Ansprüche, bei dem die radial innere Kante der ringförmigen Bremsscheibe (9) Ausnehmungen (27) aufweist, die so angeordnet sind, daß sie mit den Wälzzapfen (17) in Eingriff treten.

6. Rad nach Anspruch 5 unter Rückbeziehung auf Anspruch 3, bei dem der Innenkantenbereich der ringförmigen Bremsscheibe (9) im Bereich der Ausnehmungen (27) in der Scheibe (9) in achsialer Richtung der Scheibe (9) verlängert ist, wobei die Stirnkappen (31) in diese verlängerten Bereiche (29) der Scheibe (9) eingreifen.

7. Rad nach einem der vorhergehenden Ansprüche, bei dem die Wälzzapfen (17) so bemessen und angeordnet sind, daß sie sich innerhalb der achsialen Erstreckung der Nabe (1) befinden.

8. Rad nach einem der vorhergehenden Ansprüche, bei dem an der zentralen Nabe (1) befestigte Greifer (33) mit dem Außenkantenbereich der ringförmigen Bremsscheibe (9) an in Umfangsrichtung im Abstand voneinander liegenden Stellen in Eingriff stehen.

9. Rad nach Anspruch 10, bei dem die Greifer (33) je einen Schenkel (35) haben, der sich insgesamt zum Rad radial nach innen und im wesentlichen mit Abstand parallel zum zentralen Stege (5) erstreckt, wobei der Schenkel (35) in eine sich radial erstreckende, im wesentlichen komplementäre Ausnehmung (37) im Außenumfang der ringförmigen Bremsscheibe (9) ragt.

10. Rad nach Anspruch 9, bei dem der Schenkel (35) die Bremsscheibe (9) fest gegen die zentrale Nabe (5) hält aber radial nicht maximal in die im wesentlichen komplementäre Ausnehmung (37) reicht, wobei auch Spiel besteht zwischen der Aussenkante der Bremsscheibe (9) und dem Greifer (33).

## Revendications

1. Roue comprenant un moyeu central (1) et une jante extérieure (3), le moyeu (1) et la jante (3) étant reliés entre eux par une âme centrale (5), un disque annulaire de frein (9) étant monté de chaque côté de l'âme centrale (5), chaque disque de frein (9) étant supporté sur la roue par des liaisons élastiques de retenue (15) qui sont disposées sensiblement parallèlement à l'axe du moyeu (1), caractérisée en ce que chaque liaison élastique de retenue se présente sous la forme d'une goupille élastique tubulaire (17) qui est fixée sur l'âme (5), dans une position adjacente audit moyeu central (1), les goupilles élastiques (17) sont chacune en prise avec une zone marginale intérieure (27) du disque annulaire de frein (9) et sont chacune logées dans un évidement (19) en fome de partie de cylindre formé dans un élément de support (43) qui est fixé sur l'âme (5) en étant adjacent au moyeu central (1), lesdits éléments de support (43) étant situés dans des positions circonférentiellement espacées l'une de l'autre autour du moyeu (1), lesdits évidements (19) s'étendant dans l'ensemble parallèlement à l'axe du moyeu (1).

2. Roue telle que revendiquée dans la revendication 1, dans laquelle chaque goupille élastique tubulaire comprend un élément cylindrique creux formé d'acier à ressort, comportant une fente (25) s'étendant axialement sur toute la longueur de l'élément cylindrique.

3. Roue telle que revendiquée dans la revendication 1 ou 2, dans laquelle des chapeaux extrêmes (31) boulonnés sur les éléments de support (43) s'étendent sur l'extrémité extérieure de chaque goupille élastique tubulaire (17) pour maintenir les goupilles élastiques tubulaires respectives (17) dans lesdits évidements en forme de partie de cylindre (19).

4. Roue telle que revendiquée dans la revendication 3, dans laquelle chacun desdits chapeaux extrêmes (31) s'étend dans une extrémité d'une goupille élastique tubulaire (17) afin de maintenir la goupille élastique tubulaire (17) dans ledit évidement (19) et de fixer la goupille élastique tubulaire (17) dans une position angulaire désirée par rapport audit évidement (19).

5. Roue telle que revendiquée dans une quelconque des revendications précédentes, dans laquelle le bord radialement intérieur du disque annulaire de frein (9) comporte des évidements (27) positionnés de façon à venir en prise avec lesdites goupilles élastiques tubulaires (17).

6. Roue telle que revendiquée dans la revendication 5, lorsqu'elle est dépendante de la revendication 3, dans laquelle la zone marginale intérieure du disque annulaire de frein (9) est prolongée dans la direction axiale du disque (9) jusque dans la zone desdits évidements (27) du disque (9), lesdits chapeaux extrêmes (31) s'appliquant sur ses zones prolongées (29) du disque (9).

7. Roue telle que revendiquée dans une quelconque des revendications précédentes, dans laquelle les goupilles élastiques tubulaires (17) sont dimensionnées et agencées de façon à être situées dans l'étendue axiale du moyeu (1).

8. Roue telle que revendiquée dans une quelconque des revendications précédentes, dans laquelle des éléments d'accrochage (33), fixés sur ladite âme centrale (5), sont en prise avec la zone marginale extérieure dudit disque annulaire de frein (9) en des endroits espacés circonférentiellement l'un de l'autre.

9. Roue telle que revendiquée dans la revendication 10, dans laquelle lesdits éléments d'accrochage (33) comportent chacun une branche (35) s'étendant dans l'ensemble radialement vers l'intérieur de la roue et sensiblement parallèle mais espacée de l'âme centrale (5), ladite branche (35) pénétrant dans un évidement (37) sensiblement complémentaire et s'étendant radialement dans la périphérie extérieure du disque annulaire de frein (9).

10. Roue telle que revendiquée dans la revendication 9, dans laquelle ladite branche (35) maintient solidement le disque de frein (9) contre ladite âme centrale (5) mais ne pénètre pas radialement au degré maximal dans ledit évidement sensiblement complémentaire (37), un jeu existant ainsi entre le bord extérieur du disque de frein (9) et ledit élément d'accrochage (33).

Fig_1

Fig 2

*Fig 3*

*Fig 4*

_Fig 5_

43

19

_Fig 6_

9

5

44

43

17  19

1